# EUROPÄISCHE PATENTSCHRIFT

(11) **EP 3 669 725 B1**
(45) Veröffentlichungstag und Bekanntmachung des Hinweises auf die Patenterteilung: **07.06.2023**
(21) Anmeldenummer: 19218324.2
(22) Anmeldetag: 19.12.2019
(51) Int. Cl.: A47J 47/20, A47K 3/38

(54) **HALTERUNG, INSBESONDERE SPÜLLAPPENHALTER**
HOLDER, ESPECIALLY A WASH CLOTH HOLDER
FIXATION, EN PARTICULIER SUPPORT DE TORCHON

(30) Priorität: 21.12.2018 DE 102018133511
(43) Veröffentlichungstag der Anmeldung: 24.06.2020
(73) Patentinhaber: Schneider, Sebastian Hermann, 6060 Sarnen (CH)
(72) Erfinder: Schneider, Sebastian Hermann, 6060 Sarnen (CH)
(74) Vertreter: Prinz & Partner mbB

(56) Entgegenhaltungen:
- CH-A2- 699 129
- US-A- 3 572 511
- US-A- 5 022 104
- US-A1- 2013 117 926

## Beschreibung

Die Erfindung betrifft eine Halterung, insbesondere einen Spüllappenhalter, zum Einspannen zwischen zwei gegenüberliegenden Wänden, beispielsweise eines Spülbeckens.

Spüllappenhalter, die sich nachträglich in einem Einbauspülbecken montieren lassen, sind bekannt. Derartige Halter werden mittels Magneten, Kleber oder Saugnäpfen befestigt. Allerdings lassen diese Halter sich nach einer Montage im Spülbecken zum Teil nicht mehr zerstörungsfrei lösen oder sie lösen sich unter dem Gewicht eines nassen Spüllappens zu leicht. Vor allem die magnetbasierten Halterungen lösen sich leicht, wenn man beispielsweise beim Reinigen des Spülbeckens gegen den Halter stößt.

Die US 5,022,104 A offenbart eine Duschvorhangstange, die zwischen zwei gegenüberliegenden Wänden mittels an den Wänden befestigten Halterungen montiert werden kann.

Die US 3 572 511 A offenbart eine Kleiderstange, die mittels Druckkraftschluss montierbar ist.

Die US 2013/011792 A1 offenbart eine Klemmvorrichtung für eine Vorhangstange. Die Klemmvorrichtung hat eine Hülse und einen in der Hülse verschiebbar gelagerten Kolben. Zwischen der Hülse und dem Kolben ist ein elastisches Element wie beispielsweise eine Feder angeordnet.

Die CH 699 129 A2 offenbart einen Spüllappenhalter, welcher flache Enden aufweist, die auf einem Rand eines Spülbeckens auflegbar sind.

Es ist daher eine Aufgabe der vorliegenden Erfindung, eine verbesserte Halterung, insbesondere einen verbesserten Spüllappenhalter, bereitzustellen.

Diese Aufgabe wird erfindungsgemäß gelöst durch eine Halterung, insbesondere einen Spüllappenhalter, zum Einspannen zwischen zwei gegenüberliegenden Wänden, insbesondere eines Spülbeckens, mit einer länglichen Haltestange und mindestens einer Fixiervorrichtung, die auf einem axialen Endabschnitt der Haltestange begrenzt axial verschiebbar gelagert ist, wobei die Fixiervorrichtung ein Federelement umfasst und mittels des Federelements mit einer Kraft in eine axiale Richtung weg von der Haltestange beaufschlagt ist. Die Fixiervorrichtung umfasst ein Gehäuse, das einen hülsenförmigen Abschnitt aufweist oder insgesamt hülsenförmig ist. Zudem umfasst die Fixiervorrichtung ein Klemmelement und ist mittels des Klemmelements an der Haltestange gelagert, wobei das Klemmelement in montiertem Zustand zumindest teilweise innerhalb der Haltestange und zumindest teilweise im Gehäuse angeordnet und in der Haltestange und/oder im Gehäuse verklemmt ist. Das Klemmelement ist zumindest abschnittsweise bauchig und umfasst mehrere Schlitze, die sich in Längsrichtung erstrecken.

Mittels der erfindungsgemäßen Halterung kann beispielsweise ein Spüllappen, ohne optisch zu stören, dezent im Spülbecken bei ausreichender Belüftung trocknen und verursacht somit weniger unangenehme Gerüche.

Indem die Halterung mittels einer Federkraft im Spülbecken gehalten ist, kann dieser nachträglich in einem Spülbecken montiert, insbesondere eingespannt werden, und zwar ohne dass das Spülbecken dabei beschädigt wird. Zudem kann die Halterung besonders einfach wieder demontiert werden, ohne dass dabei irgendwelche Spuren am Spülbecken verbleiben. Des Weiteren können die Montage und Demontage besonders einfach durch einen einzigen Handgriff erfolgen.

Mittels des Klemmelements lässt sich eine Verbindung zwischen der Fixiervorrichtung und der Haltestange herstellen. Indem das Klemmelement teilweise innerhalb der Haltestange und teilweise im Gehäuse gelagert ist, ist das Klemmelement vorzugsweise vollständig von dem Gehäuse und der Haltestange umgeben und ist somit ebenfalls vor Verschmutzung geschützt.

Indem das Klemmelement zumindest abschnittsweise bauchig ist und mehrere Schlitze umfasst, die sich in Längsrichtung erstrecken, lässt sich das Klemmelement in radiale Richtung elastisch verformen, um eine radiale Klemmwirkung zu erreichen. Das heißt, dass das Klemmelement zur Verbindung mit der Haltestange und/oder der Fixiervorrichtung einfach in die Haltestange oder in das Gehäuse der Fixiervorrichtung eingesteckt werden kann.

Die Erfindung ist nicht auf einen Spüllappenhalter beschränkt. Die Halterung lässt sich beispielsweise auch als Duschvorhanghalterung zum Einspannen zwischen zwei gegenüberliegenden Wänden eines Badezimmers ausbilden. Des Weiteren lässt sich eine erfindungsgemäße Halterung auch in einer Duschkabine mit Glaswänden anbringen, um an der Halterung beispielsweise einen Duschkorb oder Duschvorhang ohne Bohrung aufzuhängen.

Die Haltestange kann ein Rohr oder ein Vollprofil mit Vertiefung an mindestens einem Ende sein. Die Verwendung eines Rohrs ist jedoch dahingehend vorteilhaft, da es sich kostengünstig als Strangpressprofil fertigen lässt.

Gemäß einer Ausführungsform sitzt auf jedem axialen Ende der Haltestange eine Fixiervorrichtung. Dadurch lässt sich die Halterung besonders einfach montieren.

Das Federelement ist vorzugsweise eine Schraubenfeder. Derartige Federelemente sind einfach und kostengünstig erhältlich und eignen sich besonders zum Bereitstellen einer axial wirkenden Federkraft.

Gemäß einer Ausführungsform umgibt der hülsenförmige Abschnitt den Endabschnitt der Haltestange zumindest im montierten Zustand. Somit kann die Fixiervorrichtung mittels des Gehäuses auf der Haltestange gleitend geführt sein.

Das Federelement ist vorzugsweise zumindest teilweise, insbesondere vollständig, innerhalb des Gehäuses gelagert. Dadurch ist das Federelement zumindest ein Stück weit, vorzugsweise vollständig, durch das Gehäuse abgeschirmt, sodass das Federelement weniger stark verschmutzt und zumindest bis zu einem gewissen Grad vor Feuchtigkeit geschützt ist. Insbesondere wird verhindert, dass ein Spüllappen direkt auf dem Federelement aufliegt. Dadurch wird auch vermieden, dass sich ein Spüllappen in dem Federelement verfangen kann.

Dadurch, dass das Klemmelement und das Federelement innerhalb des Gehäuses und/oder der Haltestange angeordnet sind, lässt sich die Halterung, insbesondere der Spüllappenhalter zudem einfach reinigen.

Das Klemmelement ist vorzugsweise im Gehäuse oder in der Haltestange verliersicher gehalten. An dem jeweils anderen Element ist das Klemmelement beispielsweise lösbar geklemmt. Auf diese Weise kann das Klemmelement an dem Gehäuse oder der Haltestange vormontiert sein und kann sich während einer nachfolgenden Handhabung oder einem Transport nicht ungewollt lösen.

Gemäß einer Ausführungsform weist das Gehäuse eine Endwand auf und das Federelement ist innerhalb des Gehäuses zwischen der Endwand des Gehäuses und dem Klemmelement angeordnet. Somit kann die Endwand eine axiale Anlagefläche für das Federelement bereitstellen und das Federelement kann das Klemmelement in eine Richtung zur Haltestange hin mit einer Federkraft beaufschlagen. Dadurch wird bewirkt, dass die Fixiervorrichtung in einem montierten Zustand in eine Richtung weg von der Haltestange vorgespannt ist. Das Federelement kann sich dabei auch teilweise innerhalb des Klemmelements erstrecken.

Die Endwand ist dabei vorzugsweise an einem von der Haltestange abgewandten Ende des Gehäuses angeordnet.

Die Endwand ist beispielsweise separat gefertigt und nachträglich mit dem Gehäuse verbunden, zum Beispiel durch eine Klebeverbindung, mittels Kunststoffschweißens, mittels einer Clipsverbindung oder Ähnlichem. Insbesondere ist die Endwand derart mit dem Gehäuse verbunden, dass diese nicht mehr zerstörungsfrei vom Gehäuse lösbar ist.

Das Gehäuse und das Klemmelement sind vorzugsweise zueinander begrenzt axial verschiebbar gelagert. Somit lässt sich die Halterung, insbesondere der Spüllappenhalter, in die meisten gängigen Spülbecken montieren, auch wenn diese sich in ihren Dimensionen leicht unterscheiden.

An dem Klemmelement ist beispielsweise ein Anschlag vorgesehen, wobei das Klemmelement mit dem Anschlag in montiertem Zustand der Halterung an einem stirnseitigen Ende der Haltestange anliegt. Somit lässt sich das Klemmelement und damit auch die Fixiervorrichtung besonders einfach in einer definierten Position relativ zur Haltestange montieren, insbesondere durch einfaches Aufstecken auf die Haltestange.

Gemäß einer Ausführungsform ist ein Führungselement vorgesehen, das fest mit dem Gehäuse, insbesondere mit der Endwand, verbunden ist, und das sich zentriert innerhalb des Gehäuses erstreckt, wobei das Federelement und/oder das Klemmelement das Führungselement koaxial umgeben. Das Führungselement stützt somit das Klemmelement und das Federelement radial ab, sodass die Fixiervorrichtung koaxial zur Haltestange ausgerichtet ist.

An dem Führungselement kann zudem ein axialer Anschlag für das Klemmelement vorgesehen sein. Dadurch kann das Klemmelement in einem nicht belasteten Zustand eine definierte Position an der Fixiervorrichtung einnehmen, wodurch die Montage des Klemmelements vereinfacht ist.

Die Fixiervorrichtung ist vorzugsweise relativ zur Haltestange um bis zu maximal 3 cm axial verschiebbar. Dadurch ist die Montage der Halterung zwischen zwei gegenüberliegenden Wänden, beispielsweise in einem Spülbecken, vereinfacht, da die Fixiervorrichtung nur um eine relativ geringe Distanz relativ zur Haltestange bewegt werden muss, um die Halterung zwischen zwei gegenüberliegenden Wänden einzuspannen, zum Beispiel in einem Spülbecken. Die Größe des Gehäuses kann aufgrund der maximal möglichen axialen Verschiebung von 3 cm ebenfalls klein gehalten werden.

Um die Halterung für verschieden große Spülbecken oder Räume anzupassen, kann die Haltestange längenverstellbar sein, insbesondere eine Teleskopstange sein.

An einer von der Haltestange abgewandten Stirnseite der Fixiervorrichtung ist beispielsweise ein Haftelement angeordnet. Das Haftelement kann einen Saugnapf oder ein anderes elastisches Element sein, insbesondere aus Gummi. Dies hat zum einen den Vorteil, dass die Halterung aufgrund des Haftelements nicht im Spülbecken oder an den Wänden eines Badezimmers abrutschen kann. Des Weiteren verhindert das Haftelement, dass das Spülbecken oder die Wände zerkratzt werden. Zudem kann die Halterung aufgrund des Haftelements auch zwischen gekrümmten Wandungen, wie sie bei Spülbecken häufiger vorkommen, zuverlässig montiert werden.

Um das Haftelement an der Fixiervorrichtung zu befestigen, kann das Haftelement an der Stirnseite der Fixiervorrichtung verklebt sein, insbesondere am Gehäuse, beispielsweise an einer außenliegenden Fläche der Endwand.

Das Gehäuse, das Federelement und das Klemmelement bilden vorzugsweise eine vormontierte Einheit. Somit kann die Fixiervorrichtung als Unterbaugruppe der Halterung in vormontiertem Zustand von einem Zulieferer bezogen werden und die Endmontage der Halterung ist vereinfacht. Das Haftelement kann ebenfalls Teil der Unterbaugruppe sein.

Erfindungsgemäß wird außerdem ein Spülbecken mit einem darin montierten Spüllappenhalter bereitgestellt, der wie vorhergehend beschrieben ausgebildet ist.

Weitere Vorteile und Merkmale der Erfindung ergeben sich aus der nachfolgenden Beschreibung und aus den nachfolgenden Zeichnungen, auf die Bezug genommen wird. In den Zeichnungen zeigen:
- Figur 1 ein erfindungsgemäßes Spülbecken mit einem erfindungsgemäßen Spüllappenhalter in einer Teilexplosionsdarstellung,
- Figur 2 eine Fixiervorrichtung des Spüllappenhalters und
- Figur 3 einen Längsschnitt durch die Fixiervorrichtung.

Die Erfindung wird nachfolgend anhand eines Spüllappenhalters 10 erläutert. Die Erfindung ist jedoch nicht auf einen Spüllappenhalter 10 begrenzt, sondern kann auch bei anderen Halterungen, zum Beispiel bei Duschvorhanghalterungen, angewendet werden.

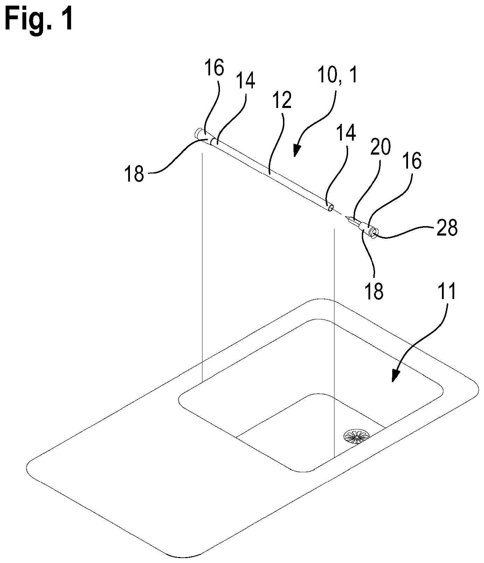

Figur 1 zeigt eine Halterung 1, insbesondere einen Spüllappenhalter 10, in einer Teilexplosionsdarstellung, der sich zwischen zwei gegenüberliegenden Wänden eines Spülbeckens 11 einspannen lässt.

Der Spüllappenhalter 10 umfasst eine längliche Haltestange 12, die beispielsweise ein Aluminiumrohr, ein Chromrohr oder ein Kunststoffrohr ist.

In Figur 1 ist eine einteilige Haltestange 12 gezeigt, es ist jedoch auch denkbar, dass die Haltestange 12 als Teleskopstange gefertigt ist, die sich variabel für verschiedene Spülbeckengrößen einstellen lässt.

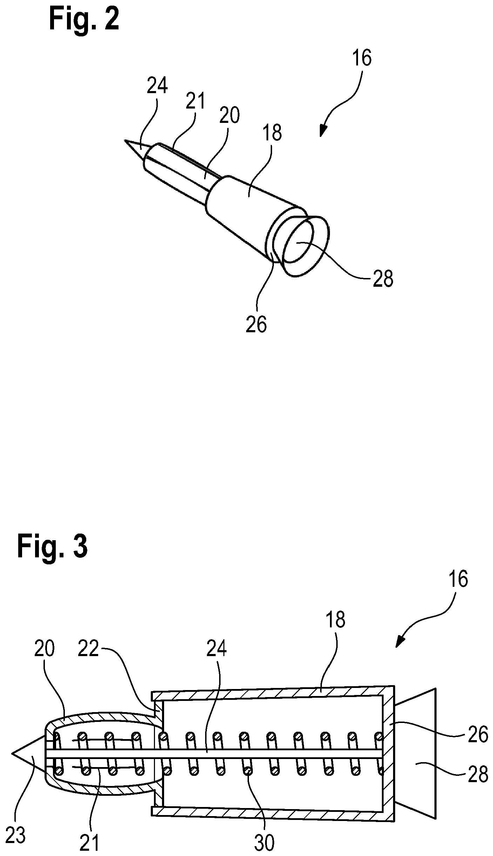

Auf den axialen Endabschnitten 14 der Haltestange 12 ist jeweils eine Fixiervorrichtung 16 gelagert, die sich relativ zur Haltestange 12 begrenzt axial verschieben lässt. Figur 2 zeigt zur besseren Veranschaulichung eine vergrößerte Ansicht einer Fixiervorrichtung 16.

Die Fixiervorrichtung 16 hat ein Gehäuse 18, das hülsenförmig ausgebildet ist und in montiertem Zustand des Spüllappenhalters 10 einen Endabschnitt 14 der Haltestange 12 umgibt. Ein Endabschnitt 14 der Haltestange 12 erstreckt sich ausgehend von einem axialen Ende der Haltestange 12 um maximal 3 cm nach innen, beispielsweise um 1,5 cm.

Die Fixiervorrichtung 16 umfasst des Weiteren ein Klemmelement 20, das in dem Gehäuse 18 ist verliersicher gehalten ist.

In einem vollständig montierten Zustand des Spüllappenhalters 10 ist das Klemmelement 20 zumindest teilweise innerhalb der Haltestange 12 und zumindest teilweise im Gehäuse 18 angeordnet. Insbesondere ist die Fixiervorrichtung 16 mittels des Klemmelements 20 an der Haltestange 12 montiert.

Zu diesem Zweck ist das Klemmelement 20 zumindest abschnittsweise bauchig und umfasst mehrere Schlitze 21, die sich in Längsrichtung des Klemmelements 20 erstrecken. Dadurch lässt sich das Klemmelement 20 in radiale Richtung elastisch verformen und kann in der Haltestange 12 klemmend gehalten sein. Um eine ausreichende Klemmkraft zu erreichen, ist ein maximaler Durchmesser des Klemmelements 20 in nicht deformiertem Zustand größer als ein Innendurchmesser der Haltestange 12, allerdings nur so viel größer, dass sich das Klemmelement 20 noch einfach in die Haltestange 12 einstecken lässt.

Um das Klemmelement 20 und somit auch die Fixiervorrichtung 16 montieren zu können, ist an dem Klemmelement 20 ein Anschlag 22 vorgesehen, der in der in Figur 3 dargestellten Schnittdarstellung zu sehen ist. In montiertem Zustand des Spüllappenhalters 10 liegt das Klemmelement 20 mit dem Anschlag 22 an einem stirnseitigen Ende der Haltestange 12 an.

Zum Zweck der Montage des Spüllappenhalters 10 sind das Gehäuse 18 und das Klemmelement 20 begrenzt axial verschiebbar zueinander gelagert.

Des Weiteren ist ein Führungselement 24 vorgesehen, das in Figuren 1 und 2 sichtbar ist und das fest mit dem Gehäuse 18, insbesondere mit einer Endwand 26 des Gehäuses 18 verbunden ist, und das sich zentriert innerhalb des Gehäuses 18 erstreckt.

Die Endwand 26 schließt das Gehäuse 18 stirnseitig an einer von der Haltestange 12 abgewandten Seite des Gehäuses 18 ab.

Das Führungselement 24 ist vom Klemmelement 20 koaxial umgeben, derart, dass das Klemmelement 20 durch das Führungselement 24 abgestützt ist.

Das Führungselement 24 kann zudem einen axialen Anschlag 23 für das Klemmelement 20 an seinem von der Endwand 26 entfernten Ende umfassen.

Um ein Abrutschen des Spüllappenhalters 10 im Spülbecken 11 zu vermeiden, ist ein Haftelement 28 vorgesehen, das Teil der Fixiervorrichtung 16 ist und das an dieser, insbesondere am Gehäuse 18, stirnseitig befestigt ist, zum Beispiel verklebt ist.

Um den Spüllappenhalter 10 in einem Spülbecken 11 einfach montieren zu können, umfasst die Fixiervorrichtung 16 ein Federelement 30, das in Figur 3 zu sehen ist, wobei die Fixiervorrichtung 16 mittels des Federelements 30 Federelements mit einer Kraft in eine axiale Richtung weg von der Haltestange 12 beaufschlagt ist. Das Federelement 30 ist im veranschaulichten Ausführungsbeispiel eine Schraubenfeder.

Das Federelement 30 ist dabei innerhalb des Gehäuses 18 zwischen der Endwand 26 des Gehäuses 18 und dem Klemmelement 20 angeordnet.

Auf diese Weise beaufschlagt das Federelement 30 das Klemmelement 20 in eine Richtung zur Haltestange 12 hin mit einer Kraft, wodurch wiederum die Fixiervorrichtung 16 - wenn das Klemmelement 20 in einer definierten Position an der Haltestange 12 montiert ist und mit dem Anschlag 22 an der Haltestange 12 anliegt - mit einer Kraft in eine Richtung von der Haltestange 12 weg beaufschlagt ist.

Zur Montage des Spüllappenhalters 10 im Spülbecken 11 kann ein Benutzer die Fixiervorrichtungen 16 relativ zur Haltestange 12 verschieben, insbesondere indem er die Fixiervorrichtungen 16 in Richtung aufeinander zu bewegt. Dabei wird das Federelement 30, das innerhalb der Fixiervorrichtung 16 angeordnet ist, komprimiert und die Gesamtlänge des Spüllappenhalters 10 wird verkürzt.

Dabei muss ein Benutzer die Fixiervorrichtungen 16 so weit zusammendrücken, dass die Gesamtläge des Spüllappenhalters 10 maximal dem Abstand der Wände des Spülbeckens 11, in dem der Spüllappenhalter 10 montiert werden soll, entspricht.

Der Benutzer kann somit den Spüllappenhalter 10 in eine gewünschte Position im Spülbecken 11 bringen.

Beispielsweise ist jede der beiden Fixiervorrichtungen 16 um maximal 3 cm relativ zur Haltestange 12 verschiebbar, insbesondere um 1,5 cm.

Sobald der Spüllappenhalter 10 in der gewünschten Position ist, kann der Benutzer die Fixiervorrichtungen 16 loslassen. Da die Fixiervorrichtungen 16 jeweils durch das Federelement 30 mit einer Kraft in eine axiale Richtung weg von der Haltestange 12 beaufschlagt sind, werden die Fixiervorrichtungen 16 gegen die Wände des Spülbeckens 11 gedrückt und der Spüllappenhalter 10 somit im Spülbecken 11 zuverlässig eingespannt.

Um den Spüllappenhalter 10 zu demontieren, muss ein Benutzer entsprechend die Fixiervorrichtungen 16 wieder nach innen zur Haltestange 12 hin verschieben.

## Patentansprüche

1. Halterung (1), insbesondere Spüllappenhalter (10), zum Einspannen zwischen zwei gegenüberliegenden Wänden, insbesondere eines Spülbeckens (11), mit einer länglichen Haltestange (12) und mindestens einer Fixiervorrichtung (16), die auf einem axialen Endabschnitt (14) der Haltestange (12) begrenzt axial verschiebbar gelagert ist, wobei die Fixiervorrichtung (16) ein Federelement (30) umfasst und mittels des Federelements (30) mit einer Kraft in eine axiale Richtung weg von der Haltestange (12) beaufschlagt ist, wobei die Fixiervorrichtung (16) ein Gehäuse (18) umfasst, das einen hülsenförmigen Abschnitt aufweist oder insgesamt hülsenförmig ist, und wobei die Fixiervorrichtung (16) ein Klemmelement (20) umfasst und mittels des Klemmelements (20) an der Haltestange (12) gelagert ist, wobei das Klemmelement (20) in montiertem Zustand zumindest teilweise innerhalb der Haltestange (12) und zumindest teilweise im Gehäuse (18) angeordnet und in der Haltestange (12) und/oder im Gehäuse (18) verklemmt ist, **dadurch gekennzeichnet, dass** das Klemmelement (20) zumindest abschnittsweise bauchig ist und mehrere Schlitze umfasst, die sich in Längsrichtung erstrecken.

2. Halterung (1) nach Anspruch 1, **dadurch gekennzeichnet, dass** der hülsenförmige Abschnitt den Endabschnitt (14) der Haltestange (12) umgibt.

3. Halterung (1) nach Anspruch 1 oder 2, **dadurch gekennzeichnet, dass** das Federelement (30) zumindest teilweise, insbesondere vollständig, innerhalb des Gehäuses (18) gelagert ist.

4. Halterung (1) nach einem der vorhergehenden Ansprüche, **dadurch gekennzeichnet, dass** das Klemmelement (20) im Gehäuse (18) oder in der Haltestange (12) verliersicher gehalten ist.

5. Halterung (1) nach einem der vorhergehenden Ansprüche, **dadurch gekennzeichnet, dass** das Gehäuse (18) eine Endwand (26) aufweist und das Federelement (30) innerhalb des Gehäuses (18) zwischen der Endwand (26) des Gehäuses (18) und dem Klemmelement (20) angeordnet ist.

6. Halterung (1) nach einem der vorhergehenden Ansprüche, **dadurch gekennzeichnet, dass** das Gehäuse (18) und das Klemmelement (20) zueinander begrenzt axial verschiebbar gelagert sind.

7. Halterung (1) nach einem der vorhergehenden Ansprüche, **dadurch gekennzeichnet, dass** an dem Klemmelement (20) ein Anschlag (22) vorgesehen ist, wobei das Klemmelement (20) mit dem Anschlag (22) in montiertem Zustand der Halterung an einem stirnseitigen Ende der Haltestange (12) anliegt.

8. Halterung (1) nach einem der vorhergehenden Ansprüche, **dadurch gekennzeichnet, dass** ein Führungselement (24) vorgesehen ist, das fest mit dem Gehäuse (18), insbesondere mit der Endwand (26), verbunden ist, und das sich zentriert innerhalb des Gehäuses (18) erstreckt, wobei das Federelement (30) und/oder das Klemmelement (20) das Führungselement (24) koaxial umgeben.

9. Halterung (1) nach Anspruch 8, **dadurch gekennzeichnet, dass** an dem Führungselement (24) ein axialer Anschlag (23) für das Klemmelement (20) vorgesehen ist.

10. Halterung (1) nach einem der vorhergehenden Ansprüche, **dadurch gekennzeichnet, dass** die Fixiervorrichtung (16) relativ zur Haltestange (12) um bis zu maximal 3 cm axial verschiebbar ist.

11. Halterung (1) nach einem der vorhergehenden Ansprüche, **dadurch gekennzeichnet, dass** die Haltestange (12) längenverstellbar ist.

12. Halterung (1) nach einem der vorherigen Ansprüche, **dadurch gekennzeichnet, dass** an einer von der Haltestange (12) abgewandten Stirnseite der Fixiervorrichtung (16) ein Haftelement (28) angeordnet ist.

13. Halterung (1) nach Anspruch 12, **dadurch gekennzeichnet, dass** das Haftelement (28) an der Stirnseite der Fixiervorrichtung (16) verklebt ist.

14. Spülbecken (11) mit einer darin montierten Halterung (1) nach einem der vorhergehenden Ansprüche.

## Claims

1. A holder (1), in particular a dishcloth holder (10), for clamping between two opposite walls, in particular of a sink (11), comprising an elongated holding rod (12) and at least one fixing device (16) which is mounted on an axial end portion (14) of the holding rod (12) for limited axial displacement, wherein the fixing device (16) comprises a spring element (30) and is urged with a force in an axial direction away from the holding rod (12) by means of the spring element (30), wherein the fixing device (16) comprises a housing (18) which includes a sleeve-shaped portion or is sleeve-shaped altogether, and wherein the fixing device (16) comprises a clamping element (20) and is mounted at the holding rod (12) by means of the clamping element (20), wherein in the assembled state the clamping element (20) is arranged at least partly within the holding rod (12) and at least partly in the housing (18) and is clamped in the holding rod (12) and/or in the housing (18), **characterized in that** the clamping element (20) is bulgy at least in sections and comprises a plurality of slits extending in the longitudinal direction.

2. The holder (1) according to claim 1, **characterized in that** the sleeve-shaped portion surrounds the end portion (14) of the holding rod (12).

3. The holder (1) according to claim 1 or 2, **characterized in that** the spring element (30) is mounted at least partly, in particular completely, within the housing (18).

4. The holder (1) according to any of the preceding claims, **characterized in that** the clamping element (20) is captively held in the housing (18) or in the holding rod (12).

5. The holder (1) according to any of the preceding claims, **characterized in that** the housing (18) has an end wall (26) and the spring element (30) is arranged within the housing (18) between the end wall (26) of the housing (18) and the clamping element (20).

6. The holder (1) according to any of the preceding claims, **characterized in that** the housing (18) and the clamping element (20) are mounted for limited axial displacement in relation to one another.

7. The holder (1) according to any of the preceding claims, **characterized in that** the clamping element (20) has a stop (22) provided thereon, the stop (22) of the clamping element (20) resting against a face side end of the holding rod (12) in the assembled state of the holder.

8. The holder (1) according to any of the preceding claims, **characterized in that** a guide element (24) is provided which is firmly connected to the housing (18), in particular to the end wall (26), and which extends within the housing (18) so as to be centered, the spring element (30) and/or the clamping element (20) coaxially surrounding the guide element (24).

9. The holder (1) according to claim 8, **characterized in that** an axial stop (23) for the clamping element (20) is provided on the guide element (24).

10. The holder (1) according to any of the preceding claims, **characterized in that** the fixing device (16) is axially displaceable in relation to the holding rod (12) by up to a maximum of 3 cm.

11. The holder (1) according to any of the preceding claims, **characterized in that** the holding rod (12) is adjustable in length.

12. The holder (1) according to any of the preceding claims, **characterized in that** an adhesive element (28) is arranged on a face side of the fixing device (16) facing away from the holding rod (12).

13. The holder (1) according to claim 12, **characterized in that** the adhesive element (28) is glued on the face side of the fixing device (16).

14. A sink (11) comprising a holder (1) fitted therein, according to any of the preceding claims.

## Revendications

1. Attache (1), en particulier support (10) de chiffon à vaisselle pour le serrage entre deux parois opposées, en particulier d'un évier (11), comprenant une tige de retenue (12) oblongue et au moins un dispositif de fixation (16) qui est monté sur un tronçon d'extrémité axial (14) de la tige de retenue (12) avec un déplacement axial limité, le dispositif de fixation (16) comprenant un élément à ressort (30) et étant sollicité avec une force dans un sens axial en éloignement de la tige de retenue (12) au moyen de l'élément à ressort (30), le dispositif de fixation (16) comprenant un boîtier (18) qui présente un tronçon en forme de douille ou qui présente généralement une forme de douille, et le dispositif de fixation (16) comprenant un élément de serrage (20) et étant monté sur la tige de retenue (12) au moyen de l'élément de serrage (20), l'élément de serrage (20), à l'état monté, étant agencé au moins partiellement à l'intérieur de la tige de retenue (12) et au moins partiellement dans le boîtier (18) et étant serré dans la tige de retenue (12) et/ou dans le boîtier (18), **caractérisée en ce que** l'élément de serrage (20) est bombé au moins par tronçons et comprend une pluralité de fentes qui s'étendent dans le sens longitudinal.

2. Attache (1) selon la revendication 1, **caractérisée en ce que** le tronçon en forme de douille entoure le tronçon d'extrémité (14) de la tige de retenue (12).

3. Attache (1) selon la revendication 1 ou 2, **caractérisée en ce que** l'élément à ressort (30) est monté au moins partiellement, en particulier entièrement à l'intérieur du boîtier (18).

4. Attache (1) selon l'une des revendications précédentes, **caractérisée en ce que** l'élément de serrage (20) est maintenu de manière imperdable dans le boîtier (18) ou dans la tige de retenue (12).

5. Attache (1) selon l'une des revendications précédentes, **caractérisée en ce que** le boîtier (18) présente une paroi d'extrémité (26) et **en ce que** l'élément à ressort (30) est agencé à l'intérieur du boîtier (18) entre la paroi d'extrémité (26) du boîtier (18) et l'élément de serrage (20).

6. Attache (1) selon l'une des revendications précédentes, **caractérisée en ce que** le boîtier (18) et l'élément de serrage (20) sont montés avec un déplacement axial limité l'un par rapport à l'autre.

7. Attache (1) selon l'une des revendications précédentes, **caractérisée en ce qu'**une butée (22) est prévue sur l'élément de serrage (20), l'élément de serrage (20) étant en appui, ensemble avec la butée (22), contre une extrémité face frontale de la tige de retenue (12) à l'état monté de l'attache.

8. Attache (1) selon l'une des revendications précédentes, **caractérisée en ce qu'**il est prévu un élément de guidage (24) qui est relié de manière solidaire au boîtier (18), en particulier à la paroi d'extrémité (26), et qui s'étend de manière centrée à l'intérieur du boîtier (18), l'élément à ressort (30) et/ou l'élément de serrage (20) entourant l'élément de guidage (24) de façon coaxiale.

9. Attache (1) selon la revendication 8, **caractérisée en ce qu'**une butée axiale (23) pour l'élément de serrage (20) est prévue sur l'élément de guidage (24).

10. Attache (1) selon l'une des revendications précédentes, **caractérisée en ce que** le dispositif de fixation (16) est axialement déplaçable jusqu'à 3 cm au maximum par rapport à la tige de retenue (12).

11. Attache (1) selon l'une des revendications précédentes, **caractérisée en ce que** la tige de retenue (12) est réglable en longueur.

12. Attache (1) selon l'une des revendications précédentes, **caractérisée en ce qu'**un élément adhésif (28) est agencé sur une face frontale du dispositif de fixation (16) qui est détournée de la tige de retenue (12).

13. Attache (1) selon la revendication 12, **caractérisée en ce que** l'élément adhésif (28) est collé sur la face frontale du dispositif de fixation (16).

14. Évier (11) comprenant une attache (1) selon l'une des revendications précédentes montée dans celui-ci.
